# EUROPEAN PATENT SPECIFICATION

(11) **EP 1 720 284 B1**
(45) Date of publication and mention of the grant of the patent: **02.07.2008**
(21) Application number: 05752399.5
(22) Date of filing: 23.05.2005
(51) Int. Cl.: H04L 12/24, H04L 12/46

(54) **A METHOD FOR MANAGING VIRTUAL PRIVATE NETWORK**
VERFAREN ZUR VERWALTUNG EINES VIRTUELLEN PRIVATEN NTEZES
PROCEDE DE GESTION DE RESEAU PRIVE VIRTUEL

(30) Priority: 21.05.2004 CN 200410044310
(43) Date of publication of application: 08.11.2006
(73) Proprietor: Huawei Technologies Co., Ltd., Longgang District, Shenzhen, Guangdong 518129 (CN)
(72) Inventor: LIU, Li, Longgang District, Guangdong 518129 (CN)
(74) Representative: Manitz, Finsterwald & Partner GbR
(86) International application number: PCT/CN2005/000717
(87) International publication number: WO 2005/114907

(56) References cited:
- EP-A- 1 172 968
- WO-A1-00/75788
- CN-A- 1 398 470
- JP-A- 2003 132 436
- US-A1- 2002 191 541
- US-A1- 2004 066 747

## Description

### Field of the Technology

The present invention relates to network management technologies in communication systems, more particularly to a method for managing a Virtual Private Network (VPN).

### Background of the Invention

The VPN refers to a technique to construct a private data communication network in a public network depending on telecommunication operators, Internet Service Providers (ISPs) and Network Service Providers (NSPs). The telecommunication operator, together with the ISP and the NSP are called providers hereinafter. In other words, the VPN is a network constructed by network element nodes and existing network connections among those network element nodes in the public network according to different functions or different demands of customers. In the VPN, there is no end-to-end physical link between any two nodes, which is needed for traditional private networks. Instead, the VPN is dynamically constructed by utilizing the existing resources in the public network. The term Virtual means that a customer can directly utilize various data lines in the provider's network instead of owning/renting a practical long-distance data line. The term Private means that only this customer can use this network while other customers cannot access/use this network. There are many techniques for implementing the VPN, such as Layer 2 Tunnel Protocol, Internet Protocol Security (IPSec), Generic Route Encapsulation (GRE), Border Gateway Protocol (BGP)/Multi Protocol Label Switching (MPLS), etc.

As the VPN simulates the implementation of multiple networks, which are rented to the customers, in one network of the provider, there exist some complexities in the management and service monitoring for the provider. ① One same physical equipment or link may be rented to multiple customers at the same time, i.e., the physical equipment may be used in multiple VPNs, so when the physical equipment or the link is broken down, the VPNs rented by multiple customers will be affected at the same time. ② The VPN rented by the same customer may have two or more sites, so the operation state of the whole VPN cannot be determined by the state of any single equipment or link. ③ The same provider may manage multiple VPNs of multiple customers at the same time, which requires monitoring all VPNs conveniently.

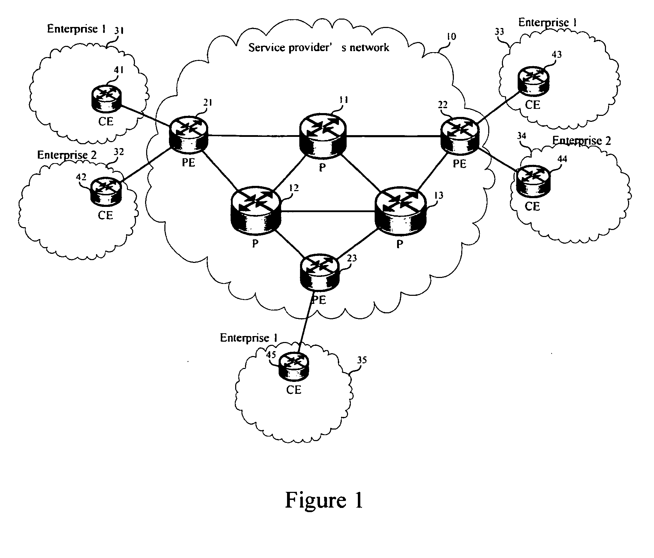

Figure 1 illustrates a network structure of the VPN based on a BGP/MPLS VPN technique. The network includes two VPNs: one is the VPN corresponding to enterprise 1, including site 31, site 33 and site 35; the other is the VPN corresponding to enterprise 2, including site 32 and site 34. The site 31, site 33 and site 35 are respectively connected to a Provider Edge (PE) 21, PE 22 and PE 23 through a Customer Edge (CE) 41, CE 43 and CE 45. Similarly, the site 32 and the site 34 are respectively connected to the PE 21 and the PE 22 in the service provider's network through CE 42 and CE 44. Furthermore, the PE 21, PE 22 and PE 23 are connected to their corresponding backbone router equipment P respectively. The CE denotes the Client Edge equipment and the PE denotes Provider Edge equipment.

It can be seen from Figure 1 that, if the PE 21 breaks down, the two VPNs corresponding to the enterprise 1 and the enterprise 2 will both go wrong. If the link between the PE 22 and the CE 43 is normal, but the link between the PE 23 and the CE 45 breaks down, the enterprise 1 will also go wrong. Therefore, the actual operation status of the VPN cannot be reflected by the malfunction or normal function of any single site.

The existing VPN network management system/VPN service management system mainly manages the VPNs of each customer, including five functions FCAPS, which are: Fault, Configuration, Accounting, Performance and Security (FCAPS). Similar to general network management systems and service management systems, topology function is also an indispensable characteristic in the VPN network management system/VPN service management system. The so-called topology function is: display interconnections among the nodes of the network in a graphics mode, which is one of the most basic and frequently used functions used by the providers in network management.

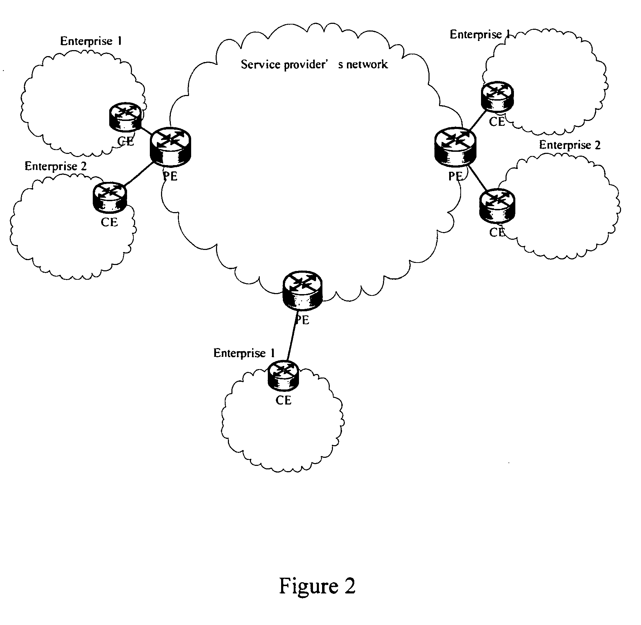

In the existing VPN network management system/VPN service management system, there generally exist two topology display methods: Provider's view and Customer's view. The Provider's view is a topology view displaying connections between the CEs and the PEs. From the point of view of the provider, the site/CE of the customer is connected to the PE in the provider's network. There are many VPNs in the network, and each customer may rent only one VPN or more than one VPN. The Provider's view of a scenario that two enterprises respectively rent one VPN is shown in Figure 2. Generally, the Provider's view can provide a whole-network view as well as the Customer's view filtered according to customers.

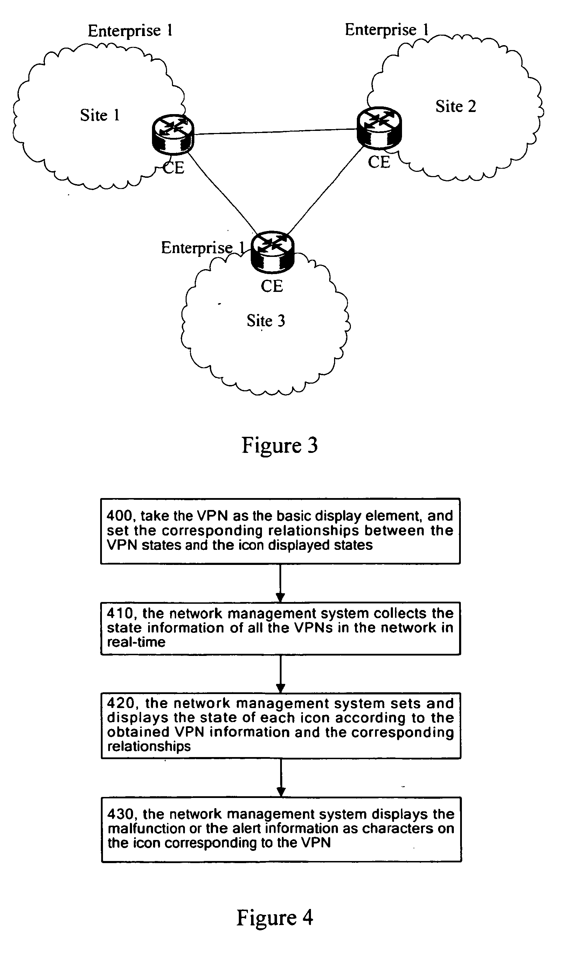

The Customer's view is a topology view displaying the virtual connections between CEs. From the point of view of the customer, the network is directly connected from a site/CE to another site/CE, i.e., the CEs are directly connected to each other, although the practical flow of a physical network needs to pass the intermediate network of the provider. Generally, the Customer's view is viewed according to the customers. Figure 3 shows the Customer's view when the enterprise 1 rents the VPN, and illustrates the connections between three office sites of the enterprise 1, which are: site 1, site 2 and site 3 respectively. Certainly, multiple customers can be viewed in the same Customer's view.

It can be seen by comparing the Provider's view with the Customer's view that: the Provider's view focuses on how to display connections of the CEs in the network in graphics mode, i.e. which CE is connected to which PE. The advantage of the Provider's view is that it can provide a whole-network view of VPN connection points. While the Customer's view focuses on providing topology connections between the CEs. The advantage of the Customer's view is that it simplifies the intermediate network for the customer and makes it convenient to understand the customer's virtual network structure. However, both the Provider's view and the Customer's view have a common disadvantage in practical applications: neither the Provider's view nor the Customer's view can provide a clear and general graphic display about the status of all the VPNs, such as malfunction, traffic and performance.

In practical applications of an ordinary network management, a network manager may keep the topology view of the whole network open for a long time, and acquaint himself with the operating status of the current network through an interface of the topology view. The ordinary network management does not include VPN characteristics. But the particularity and complexity of the VPN result in that neither the Provider's view nor the Customer's view can provide a general and clear answer to the status of all the VPNs in the network for the network manager. The status includes not only the malfunction information reported by the equipment, but also the traffic and performance data obtained by the network system through active polling, all of which may affect the use of the VPN for the customer.

For instance, in a BGP/MPLS VPN, a VPN Routing/Forward (VRF) routing table of a PE exceeds a limit and sends an alert to the VPN network management system/VPN service management system, which means that, after a period of time, if the number of items in the routing table continues increasing, the VPN customer using this VRF routing table cannot access subsequent added destination network segments. It is impossible to represent this situation in the Customer's view because there is no icon corresponding to the PE in the Customer's view; it is also difficult to represent this situation in the Provider's view because: although the icon of the corresponding PE can be changed into malfunction state in the Provider's view, one PE may connect with multiple CEs, and in the case that a certain VRF routing table exceeds the limit it affects the VPN customer using this VRF without affecting other VPN customers using the PE, so changing the icon corresponding to the PE into malfunction state will mislead into false information that all CEs connected to the PE are affected.

For another example, in a BGP/MPLS VPN, if the connection of BGP counterparts between two PEs breaks down, the routing will be lost, in other words, the CEs connected with two PEs cannot intercommunicate with each other. It is also impossible to represent this situation in the Customer's view, because there is no PE in the Customer's view at all; it is also difficult to represent this situation in the Provider's view, because the Provider's view does not include the state of the BGP counterparts. The problem will directly affect connectivity of the VPN.

A further example is, in a MPLS VPN, if a backbone router P breaks down, a Label Switching Path (LSP) between two PEs may go wrong and the VPN connection may be affected accordingly. Because neither the Customer's view nor the Provider's view includes the router P, the situation cannot be represented in the Customer's view or the Provider's view.

If the traffic from one site to another site inside the VPN exceeds the limit, the traffic of the provider's network may increase while the bandwidth resource is reduced. The situation cannot be represented in the Provider's view, because the Provider's view does not include the connection status between two CEs; although the situation can be properly represented in the Customer's view, one provider's network may provide as many as hundreds of VPNs, therefore, it is impossible to display the Customer's views of all VPNs in one interface.

In conclusion, possible reasons to the above-mentioned problems can be summed up as follows:
1) state information represented by the Provider's view and the Customer's view is limited to three objects, i.e., the PEs, the CEs and the links between the PEs and the CEs, while there are more objects that affect the VPN state in practical applications.
2) since there are as many as hundreds or thousands of VPNs in the network, the Customer's view can hardly provide a general view for all VPNs in the network. Supposing that each VPN includes four sites on average, and each CE icon includes 32*32 pixels, and plus the space for drawing links among the icons, 9*32*32 pixels in the screen are needed to display the Customer's view of one VPN. Taking the generally used display with 1024*768 resolution as an example (ignoring the menu, state, window frame and other spaces that a system usually has), the whole screen can accommodate a maximum number of 85 VPNs at the same time. In practical applications, however, there are many large-scale VPNs, such as VPNs of multinational enterprises, including hundreds of sites, which are impossible to be displayed on just one screen.
3) Although the Provider's view can display the connections from the PEs to the CEs in the whole network, it has little information about each VPN, therefore, it is difficult to determine which factors, equipment or links belong to which VPN in the Provider's view.

Besides the Provider's view and the Customer's view, traditional topology views, such as an IP topology view, can also be adopted. The IP topology view directly displays the original topology view in the network management system without the consideration of particularity of the VPN environment. Therefore, it is impossible to incarnate any information of the VPN in the traditional topology views, and it is also impossible to satisfy the need of network management and surveillance under the VPN scenarios without the concept of customer.

US patent No. 2004/066747 A1 discloses a method and system for automated diagnosis of problems in a VPN connection by an end user of the VPN connection. US patent No. 2002/191541 A1 provides a system and a method for topology constrained routing policy provisioning between a plurality of sites in a VPN.

### Summary of the Invention

The present invention provides a method for managing a Virtual Private Network (VPN), so as to quickly understand and monitor states of all VPNs operating in the network.

A method for managing a VPN, including the following steps:
taking one VPN or one customer as a basic display element in a topology view which includes icons displayed in layers, and each basic display element corresponds to one icon in a lower layer, classifying more than one VPN with at least one common property into a group, which corresponds to one icon in an upper layer in the topology view; and
configuring corresponding relationships between VPN states and icon displayed states;
collecting state information of all the VPNs;
setting and displaying the state of each icon in the lower layer according to the obtained VPN state information and the corresponding relationships between the VPN states and the icon displayed states;
setting and displaying the state of each icon in the upper layer according to the state information of all the VPNs in the group corresponding to the icon in the upper layer.

The method further includes: the network management system displays the VPN state information on the icon corresponding to the VPN in a form of character information. Wherein, the character information is malfunction or alert reason or other information to be noticed.

In the above-mentioned scheme, the step of configuring the corresponding relationships between the VPN states and the icon displayed states includes: representing different states of the VPN by different colors, different shapes, different filling modes or different filling sizes.

The displayed state of the icon corresponding to the VPN group is the state of the most serious malfunction among the VPNs in the group.

In the above-mentioned scheme, the step of collecting the state information includes: the network management system actively inquiring about each VPN site, or passively accepting messages reported by each VPN site.

The method further includes: the network management system executes the operation upon one or a group of VPNs corresponding to the icon after receiving an operation command for a certain icon.

It can be seen by comparing the technical scheme of the present invention with that in the prior art that, the differences are: the present invention takes the VPN or the customer as the basic display element, and sets the corresponding relationships between the VPN states and the icon displayed states. The network management system collects state information of all VPNs in the network, and then sets and displays the state of the icon corresponding to each VPN or customer according to the VPN state information and the corresponding relationships between the VPN states and the icon displayed states. Wherein, the icon state can be represented in many ways, such as: different colors, different shapes, different filling modes, different filling sizes, etc. Moreover, each icon can correspond to one VPN or a group of VPNs that have at least one common characteristic. Accordingly, the network manager can operate one or a group of VPNs corresponding to one icon by only sending a command to the icon. Furthermore, the information, such as malfunction reason, can also be displayed on the icon of the corresponding VPN as characters in the present invention.

The technical scheme provided by the present invention makes it possible to quickly and conveniently understand the current states of all VPNs operating in the network. The present invention will be illustrated hereinafter with reference to examples:
in a Border Gateway Protocol/Multi Protocol Label Switching (BGP/MPLS) VPN, a VPN Routing/Forward (VRF) routing table of a Provider Edge (PE) exceeds a limit and sends an alert to the VPN network management system/VPN service management system, which means that, after a period of time, if the number of items in the routing table continues increasing, the VPN customer using this VRF routing table cannot access subsequent added destination network segments. Under this situation, since the method of the present invention can represent different states of the VPN by different colors, the icon corresponding to the VPN where the VRF locates is set as red. If there are upper VPN layers, this VPN transfers the color information representing the state to the upper layer nodes.

For another example, in a BGP/MPLS VPN, if the connection of BGP counterparts between two PEs breaks down, the routing will be lost, in other words, the CEs connected with two PEs cannot intercommunicate with each other. Under this situation, the method of the present invention can set icon colors corresponding to all VPNs that depend on this connection as red. Similarly, if there are upper VPN layers, this VPN transfers the color information representing the state to the upper layer nodes.

For another example, in a MPLS VPN, if a backbone router P breaks down, a Label Switching Path (LSP) between two PEs may goes wrong and the VPN connection may be affected accordingly. In this case, the method of the present invention can set the icon colors corresponding to all the VPNs that use the LSP as red. Similarly, if there are upper VPN layers, this VPN transfers the color information representing the state to the upper layer nodes.

A further example is, if the traffic from one site to another site inside the VPN exceeds the limit, the traffic of the provider's network may increase while the bandwidth resource is reduced. The method of the present invention can set the icon corresponding to the VPN as red.

It can be seen that, the present invention can generally and clearly display the current states of all VPNs in the network, so that the network manager can get an open-and-shut understanding of all VPN states. Furthermore, the present invention can adopt different display manners, such as different colors, different shapes, different filling modes, different filling sizes, etc., to represent different states of the VPN, which makes the implementation of the present invention flexible, convenient and simple.

### Brief Description of the Drawings

Figure 1 is a schematic diagram illustrating a structure of a VPN adopting BGP/MPLS VPN technique;
Figure 2 is a schematic diagram illustrating a Provider's view of the VPN in the prior art;
Figure 3 is a schematic diagram illustrating a Customer's view of the VPN in the prior art;
Figure 4 is a flowchart illustrating the network management of the VPN according to an embodiment of the present invention;
Figure 5 a schematic diagram illustrating the display result of the VPN according to an embodiment of the present invention;
Figure 6 is a schematic diagram illustrating the classified and layered display result of the VPN according to an embodiment of the present invention.

### Detailed Description of the Invention

The present invention will be illustrated in detail hereinafter with reference to the accompanying drawings and taking the VPN as basic display element which is corresponding to each display icon.

According to an embodiment of the present invention, brand-new topology display method is adopted in the VPN network management system, taking the VPN or the customer as the basic display element, i.e., taking the VPN or the customer as the topology display object, namely the display element, which is corresponding to the icon in the topology, and setting the corresponding relationships between the VPN states and the icon displayed states. The network management system collects state information of all VPNs in the network, and then sets and displays the state of the icon corresponding to each VPN or customer according to the current VPN state and the corresponding relationships between the VPN states and the icon displayed states.

### As shown in Figure 4, the VPN network management includes the following steps:

Step 400: determine basic display elements of corresponding icons in the topology view, and set up corresponding relationships between the VPN states and icon displayed states.

Step 410: the network management system collects the current state information of all VPNs in the network in real-time. The state information can be actively inquired by the network management system, or be passively reported. For instance, the network management system can send an inquiry command to each site of all VPNs dominated by this network management system periodically. Each VPN site sends the state information of itself to the network management system after receiving the inquiry command. Or, the site actively sends fault information to the network management system when a malfunction happens to the VPN site, e.g., the VPN connection breaks down.

Step 420: the network management system sets and displays the state of each icon on a network management operation terminal according to the VPN state information obtained in step 410 and the corresponding relationships between the VPN states and the icon displayed states. For instance, the obtained VPN state information is a connection malfunction which happens to the VPN-h, if the different filling modes are adopted to represent different VPN states, then filling the icon with grid to represent a common malfunction.

Step 430: the network management system displays the malfunction or alert information on the icon corresponding to the VPN as characters, which is optional.

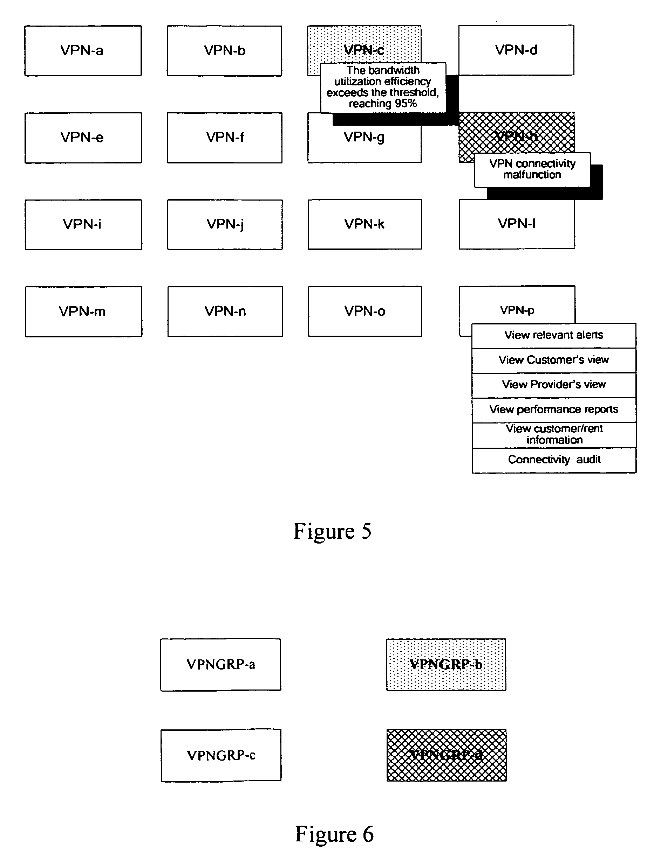

As shown in Figure 5, the VPN is taken as the topology display element in the topology view in the embodiment, and each VPN is displayed by an icon. The network shown in Figure 5 includes 16 VPNs as from VPN-a to VPN-p.

In the embodiment, the states of the icons can be displayed by different ways, for instance: adopting different colors, different shapes, different filling modes, and different filling sizes, etc., to represent different states of the VPN. Specifically, different colors can be adopted to represent different malfunction grades, such as: yellow denotes common malfunctions, while red denotes important malfunctions. The malfunction grades can also be represented by different shapes, e.g., as to one VPN icon, a square denotes common malfunctions, while a triangle denotes important malfunctions. In addition, different filling modes can also be adopted to represent the different malfunction grades, e.g., dotted filling denotes common malfunctions, while grid filling denotes important malfunctions, as shown in Figure 5. Furthermore, different filling sizes can be adopted to represent the different malfunction grades, e.g., 1/3 filling of the icon denotes common malfunctions, while2/3 filling of the icon denotes important malfunctions, etc.

In practical applications, the current state of the VPN can be directly represented by a selected icon display manner, such as color, shape, filing mode or filling size, according to the corresponding relationships. As to which display state corresponds to which state, such as whether it is red or blue that denotes the important malfunction, can be specified by system developers or network managers.

If the network is too large to be displayed in one interface, or if it is hoped that all VPNs in the network are classified to display, classified display or layered display can be adopted. Specifically, more than one VPN with at least one common property are classified into a group, which corresponds to one icon in the topology view. Under this situation, each icon in the highest layer corresponds to multiple VPNs in the group. When clicking this icon to enter into the next layer, each icon in this layer corresponds to a VPN in the group. Certainly, there can be many layers in the layered structure, and the specific method can be specified according to practical requirements.

For example, it is classified based on regions: the whole country is divided into regions as East China, Central China, North China, etc. Each region is taken as a VPN and corresponds to an icon in the topology view of the highest layer. Accordingly, East China, Central China and North China respectively include several VPNs in their respective regions. At this time, different network managers can manage different regions by assigning different management authorities. For another example, it is classified based on customer grades: all customers are divided into gold VPN, silver VPN and bronze VPN, and each type of the VPN can further include several VPNs; thus the VPNs with different grades can be differentiated and correspond to different malfunction processing speeds.

The above-mentioned layered and classified display method can be nested. For instance, the customers can be divided based on regions and then be divided based on the customer grades; or divided based on large regions and then small regions, while the rest may be deduced by analogy. Such multi-layer structures can be theoretically endless, but there are generally 2 or 3 layers for practicability and usability.

As to the display state of the upper layer VPN in the layered structure, it is related to the states of all the VPNs in the next layer, as shown in Figure 6. The whole network is divided into four VPN groups, i.e., VPNGRP-a to VPNGRP-d. And the icon state of each VPN group is determined by the display states of all the VPNs in the next layer. It is convenient for the VPN manager to open the top layer topology view to understand the states of all the VPNs in the network.

In case of layered and classified display, if a certain VPN breaks down, all the layers above this VPN should be displayed as malfunction. For instance, the whole network is divided into four VPN groups, and the first group further includes three VPN subgroups. So when the malfunction happens to a certain VPN in the first VPN subgroup, both the icon of the first VPN subgroup and that of the first VPN group should be changed to malfunction states, such as red. At this time, if only the four VPN groups of the first layer are displayed on the network management terminal, the icon of the first VPN group should be displayed as the malfunction state, such as red. If entering the next layer, the icon of the first VPN subgroup is displayed as the malfunction state, such as red.

In case of layered and classified display, if one icon corresponds to multiple VPNs with different grades of alerts and malfunctions. Taking different colors denoting different malfunction degrees, one of the VPN displays a yellow alert, while another VPN displays a red alert which is more serious. At this time, the icon colors of the upper layer should display the most serious malfunction state among the multiple VPNs corresponding to this icon, in other words, in this case, the icon should display the color red.

To make the malfunction reason clearer and more specific, the present embodiment further displays the characters on the corresponding icon to concretely describe the malfunction. Since the network management system knows the specific position of the icons corresponding to each VPN or each VPN group in the topology view, the network management system can transform the information into characters after receiving the malfunction information of a certain VPN, and display the characters at the position of the icon corresponding to the VPN which is broken down, and the characters display the reason of the malfunction at the corresponding position of the VPN which is broken down.

The advantage of displaying the character information is that, the network manager can quickly know the reason of the malfunction through the character information in addition to occurrence of the malfunction through the displayed state such as color. For instance, when the connection of the VPN-h goes wrong, as shown in Figure 5, the VPN-h will send the malfunction information to the network management system, the network management system sets the icon corresponding to this VPN as the malfunction state, e.g. sets the icon as red, and then directly displays contents of the received malfunction information on the icon of the VPN-h, as shown in Figure 5. Those skilled in the art will understand that other malfunction information display methods can also be adopted without departing from the present invention, such as displays of the malfunction information when the a mouse is moved on the icon, etc.

Certainly, besides the malfunction information, other important information can also be displayed, as shown in Figure 5. The bandwidth utilization efficiency of the VPN-c exceeds a pre-configured threshold, which can also be displayed on the corresponding icon of the VPN-c.

In case of layered and classified display, if an icon corresponds to multiple VPNs, the alert and malfunction information of all the VPNs corresponding to this icon can be displayed on the icon. If there are too many contents to be displayed, the most important information can be selected to be displayed with priority. The specific process of displaying these contents belongs to the prior art, which is not to be illustrated herein.

When the network manager sends a command to one icon on the network management operation terminal, the network management system performs operations upon one VPN or a group of VPNs corresponding to the icon.

In the embodiment of the present invention, a right-button-activated menu of related operations, such as checking related fault, checking the Customer's view, checking the Provider's view, checking the performance report form and so on, can be provided on the icon of each VPN, as shown in Figure 5. When the network manager selects a menu, the network management system will send the operation corresponding to the menu to one VPN or a group of VPNs corresponding to the icon. Feedback information, if it exists, can be displayed on the network management operation terminal. Specific processes of triggering corresponding operations according to the selected menu and obtaining the corresponding information belongs to the prior art, which is not illustrated herein.

In practical applications, since most customers may apply for just one VPN, in VPN scenarios, the customer can also be taken as the basic display element, and each customer corresponds to one icon in the topology view. If a customer applies for multiple VPNs, the customer can be virtually taken as multiple sub-customers to reach the object that one customer corresponds to one VPN. Under this situation, the method for implementing the VPN network management is basically the same as the above-illustrated step 400 to step 430, just that the basic display element is the customer instead of the VPN.

While the present invention has been shown and described with reference to several preferable embodiments of the present invention, it will be understood by those skilled in the art that various changes in form and in detail can be made without departing from the invention as defined by the appended claims.

## Claims

1. A method for managing Virtual Private Networks, VPNs, comprising:
taking one VPN or one customer as a basic display element in a topology view which comprises icons displayed in layers, and each basic display element corresponds to one icon in a lower layer (400);
classifying more than one VPN with at least one common property into a group, which corresponds to one icon in an upper layer in the topology view;
configuring corresponding relationships between VPN states and icon displayed states (400);
collecting state information of all the VPNs (410);
setting and displaying the state of each icon in the lower layer according to the obtained VPN state information and the corresponding relationships between the VPN states and the icon displayed states(420);
setting and displaying the state of each icon in the upper layer according to the state information of all the VPNs in the group corresponding to the icon in the upper layer.

2. The method according to claim 1, further comprising:
a network management system displaying the VPN state information on the icon corresponding to the VPN in a form of character information.

3. The method according to claim 2, wherein, the character information is a malfunction reason or an alert reason or other information to be noticed.

4. The method according to claim 1 or 2, wherein, the step of configuring the corresponding relationships between the VPN states and the icon displayed states comprises:
representing different states of the VPN by different colors, or different shapes, or different filling modes or different filling sizes.

5. The method according to claim 1, wherein, the displayed state of the icon corresponding to the VPN group is the state of the most serious malfunction among the VPNs in the group.

6. The method according to claim 1 or 2, wherein, the step of collecting the state information comprises:
the network management system actively inquiring each VPN site, or passively accepting messages reported by each VPN site.

7. The method according to claim 1 or 2, further comprising:
after receiving an operation command for a certain icon, the network management system executes the operation upon one or a group of VPNs corresponding to the icon.

## Patentansprüche

1. Verfahren zum Verwalten von virtuellen privaten Netzen, VPNs, das umfasst, dass
in einer Topologieansicht, die in Schichten angezeigte Symbole umfasst, ein VPN oder ein Kunde als Basisanzeigeelement hergenommen wird und jedes Basisanzeigeelement einem Symbol in einer unteren Schicht entspricht (400);
mehr als ein VPN mit mindestens einer gemeinsamen Eigenschaft in eine Gruppe klassifiziert werden, die einem Symbol in einer oberen Schicht in der Topologieansicht entspricht;
entsprechende Beziehungen zwischen VPN-Zuständen und Symbolanzeigezuständen konfiguriert werden (400);
eine Zustandsinformation aller VPNs gesammelt wird (410);
der Zustand jedes Symbols in der unteren Schicht gemäß der erhaltenen VPN-Zustandsinformation und den entsprechenden Beziehungen zwischen den VPN-Zuständen und den Symbolanzeigezuständen gesetzt und angezeigt wird (420);
der Zustand jedes Symbols in der oberen Schicht gemäß der Zustandsinformation aller VPNs in der Gruppe, die dem Symbol in der oberen Schicht entspricht, gesetzt und angezeigt wird.

2. Verfahren nach Anspruch 1, das ferner umfasst, dass
ein Netzverwaltungssystem die VPN-Zustandsinformation an dem Symbol, das dem VPN entspricht, in Form einer Zeicheninformation anzeigt.

3. Verfahren nach Anspruch 2, wobei die Zeicheninformation ein Fehlfunktionsgrund oder ein Alarmgrund oder eine andere zu beachtende Information ist.

4. Verfahren nach Anspruch 1 oder 2, wobei der Schritt des Konfigurierens der entsprechenden Beziehungen zwischen den VPN-Zuständen und den Symbolanzeigezuständen umfasst, dass
verschiedene Zustände des VPN durch verschiedene Farben oder verschiedene Formen oder verschiedene Füllarten oder verschiedene Füllgrößen dargestellt werden.

5. Verfahren nach Anspruch 1, wobei der Anzeigezustand des Symbols, das der VPN-Gruppe entspricht, der Zustand der gravierendsten Fehlfunktion unter den VPNs in der Gruppe ist.

6. Verfahren nach Anspruch 1 oder 2, wobei der Schritt des Sammelns der Zustandsinformation umfasst, dass
das Netzverwaltungssystem aktiv jede VPN-Seite abfragt oder passiv durch jede VPN-Seite berichtete Nachrichten annimmt.

7. Verfahren nach Anspruch 1 oder 2, das ferner umfasst, dass
das Netzverwaltungssystem nach dem Empfangen eines Operationsbefehls für ein bestimmtes Symbol die Operation bei einem oder einer Gruppe von VPNs ausführt, das bzw. die dem Symbol entspricht.

## Revendications

1. Procédé de gestion de réseaux privés virtuels, VPN pour *« Virtual Private Network »,* comprenant les étapes consistant à :
prendre un réseau VPN ou un client comme élément de base de l'affichage dans une vue topologique qui comprend des icônes disposées en couches, chaque élément de base de l'affichage correspondant à une icône dans une couche inférieure (400) ;
classer plusieurs réseaux VPN ayant au moins une propriété commune dans un groupe qui correspond à une icône dans une couche supérieure de la vue topologique ;
configurer des relations correspondantes entre des états des réseaux VPN et des états affichés par des icônes (400) ;
collecter des informations d'état de tous les réseaux VPN (410) ;
paramétrer et afficher l'état de chaque icône dans la couche inférieure en fonction des informations d'état obtenues des réseaux VPN et des relations correspondantes entre les états des réseaux VPN et les états affichés par des icônes (420) ;
paramétrer et afficher l'état de chaque icône de la couche supérieure en fonction des informations d'état de tous les réseaux VPN dans le groupe correspondant à l'icône de la couche supérieure.

2. Procédé selon la revendication 1, comprenant en outre l'étape consistant à :
afficher par le système de gestion de réseaux les informations d'état des réseaux VPN sur l'icône correspondant au réseau VPN sous la forme d'informations textuelles.

3. Procédé selon la revendication 2, dans lequel les informations textuelles sont une raison du défaut de fonctionnement ou une raison de l'alerte ou d'autres informations à relever.

4. Procédé selon la revendication 1 ou 2, dans lequel l'étape de configuration des relations correspondantes entre les états des réseaux VPN et les états affichés par les icônes comprend l'étape consistant à :
représenter différents états du réseau VPN par différentes couleurs, ou différentes formes, ou différents modes de remplissage, ou différentes tailles de remplissage.

5. Procédé selon la revendication 1, dans lequel l'état affiché par l'icône correspondant au groupe de réseaux VPN est l'état du plus grave défaut de fonctionnement parmi les réseaux VPN du groupe.

6. Procédé selon la revendication 1 ou 2, dans lequel l'étape de collecte des informations d'état comprend l'étape consistant à :
interroger activement par le système de gestion des réseaux chacun des sites VPN ou bien accepter passivement des messages envoyés par chaque site VPN.

7. Procédé selon la revendication 1 ou 2, comprenant en outre l'étape consistant à :
après avoir reçu une instruction d'opération pour une certaine icône, exécuter cette opération par le système de gestion de réseaux sur un réseau VPN ou un groupe de réseaux VPN correspondant à l'icône.
